Europäisches Patentamt

European Patent Office

Office européen des brevets

(19)

(11) Veröffentlichungsnummer: **0 090 298**
**B1**

(12) **EUROPÄISCHE PATENTSCHRIFT**

(45) Veröffentlichungstag der Patentschrift:
03.09.86

(51) Int. Cl.⁴: **G 06 F 7/52**

(21) Anmeldenummer: **83102742.0**

(22) Anmeldetag: **19.03.83**

(54) **In MOS-Technik integrierter schneller Multiplizierer.**

(30) Priorität: **25.03.82 FR 8205083**

(43) Veröffentlichungstag der Anmeldung:
**05.10.83 Patentblatt 83/40**

(45) Bekanntmachung des Hinweises auf die Patenterteilung:
**03.09.86 Patentblatt 86/36**

(84) Benannte Vertragsstaaten:
**DE GB IT NL**

(56) Entgegenhaltungen:
**GB-A-2 030 743**
**US-A-3 866 030**
**US-A-3 900 724**

**ELECTRONICS LETTERS, Band 18, nr. 6, 18. März
1982, Seiten 241-243, London, GB. J.V. McCANNY et
al.: "Implementation of signal processing
functions using 1-bit systolic arrays"**
**IEEE TRANSACTIONS ON COMPUTERS, Band C24,
Nr. 3, März 1975, Seiten 317-322, New York, USA J.
DEVERELL: "Pipeline iterative arithemtic arrays"**

(73) Patentinhaber: **ITT INDUSTRIES INC., 320 Park
Avenue, New York, NY 10022 (US)**

(72) Erfinder: **Lerouge, Claude Paul Henri, 4, Place
d'Auvergne, F-78310 Maurepas (FR)**

(74) Vertreter: **Morstadt, Volker, Dipl.- Ing., c/o
Deutsche ITT Industries GmbH
Patent/Lizenzabteilung Postfach 840 Hans- Bunte-
Strasse 19, D-7800 Freiburg/Brsg. (DE)**

## Beschreibung

Die Erfindung beschäftigt sich mit einem Hochgeschwindigkeits-Multiplizierer in integrierter MOS-Technik zur Multiplikation zweier N-Bit-Binärworte nach dem Oberbegriff des Anspruchs 1, wie er aus "Computer" (Okt. 1978) Seiten 19 bis 29 bekannt ist. Bei diesem Multiplizierer sind in einer quadratischen Matrix $N^2$ Elementarmultiplizierer angeordnet, von denen jeder das Teilprodukt eines auf eine entsprechende Matrixspalte einwirkenden Bits des ersten Binärwortes mit einem auf eine entsprechende Matrixzeile einwirkenden Bits des zweiten Binärwortes liefert. Zur fortlaufenden Sumenbildung, die zur Bildung der 2N Bits des Endergebnisses erforderlich ist, sind bei diesem Multiplizierer binäre Elementaraddierzellen mit den Elementarmultiplizierern verbunden. Diese Elementaraddierzellen sind in einer zugeordneten Matrix angeordnet, in der der Summenausgang jeder Zelle in Richtung der Matrixdiagonalen über die Elementarmultiplizierer unter Bildung eines Teilproduktes gleicher Ordnung mit dem Eingang einer benachbarten Zelle verbunden ist. Bei dem bekannten Multiplizierer ist ferner der Übertragsausgang jeder Zelle mit dem Eingang einer benachbarten Zelle in der oben genannten Richtung, in die Zeile oder Spalte der zugeordneten Matrix zur Ausgangsseite dieser Matrix hin unter Bildung des höchstwertigen Bits des Endergebnisses verbunden.

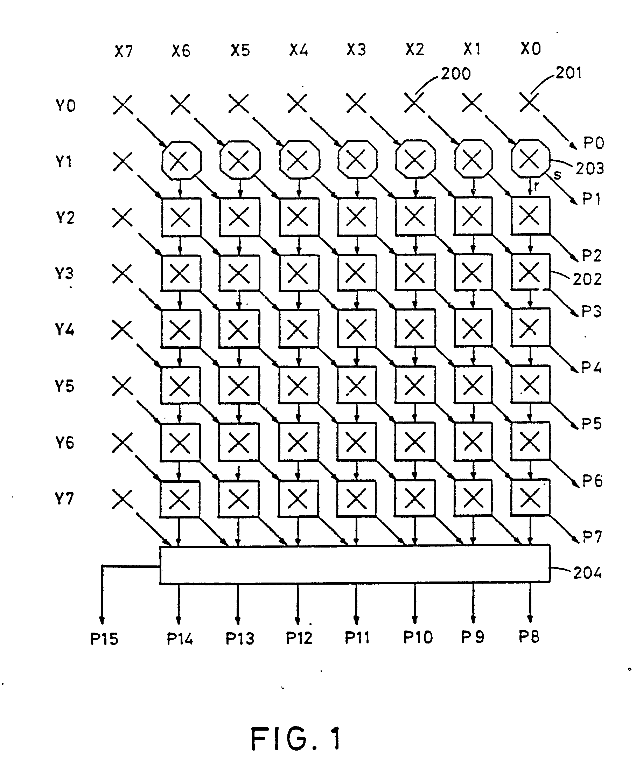

Ein solcher Multiplizierer unter Verwendung der "Übertragsrückstellungs-Addierer" -Technik (carry-save adder) wird insbesondere auf Seite 21 der Veröffentlichung "High-speed monolithic multiplier for real-time digital signal processing" von Shlomo Waser der oben genannten Veröffentlichung "Computer" (Okt. 1978) Seite 19 bis 29, beschrieben und ist in der anliegenden Fig. 1 dargestellt. Er zeichnet sich hauptsächlich durch die Rückstellung der auf die folgende Stufe zu übertragenden Summe der Übertragssignale aus, wodurch die Wartezeit für den Übertrag zur Ausführung der folgenden Addition eliminiert ist. Bei einem solchen Multiplizierer hängt die Multiplikationsgeschwindigkeit von der Übertragsfortpflanzungszeit ab. Es sind gegenwärtig binäre Additionszellen für Hochgeschwindigkeits-Übertragsfortpflanzung bekannt geworden, die die Leistung eines asynchronen Multiplizierers des oben beschriebenen Typs verbessern. Derartige Zellen werden beispielsweise in der FR-A-25 16 675 beschrieben. Bei diesen Zellen ist die Übertragsfortpflanzungszeit gegenüber der Summenbildungszeit begünstigt.

Dadurch wird jedoch ein Ungleichgewicht zwischen der Übertrags- und der Summen-Fortpflanzungszeit hervorgerufen, und, falls dieses Ungleichgewicht zugunsten des Übertrags verstärkt wird, entsteht das Problem, daß an der folgenden angrenzenden Zelle zwar das Übertragssignal sehr rasch verfügbar ist, daß man aber auf das Summensignal von der vorhergehenden Zelle warten muß. Daher wird der Vorteil der Hochgeschwindigkeits-Übertragsfortpflanzung verloren.

Aus der US-A-38 66 030 ist ein Multiplizierer bekannt, der aus einer quadratischen Matrix mit Elementaraddierzellen vom Typ der Hochgeschwindigkeits-Übertragsfortpflanzung aufgebaut ist, in denen die Summensignal-Bildungszeit das zweifache der Übertragsfortpflanzungszeit beträgt. In dieser Matrix erfolgt die Summensignalausbreitung in Sprüngen über je zwei Zellen, wodurch die niedrige Fortpflanzungsgeschwindigkeit des Summensignals gegenüber der des Übertragssignals kompensiert wird.

Aufgabe der Erfindung ist ebenfalls, dieses Problem zur Maximierung des Vorteils der verbesserten Übertragsfortpflanzungsgeschwindigkeit in binären Addierzellen durch Wiederherstellung des Gleichgewichtes im Multiplizierer zwischen der Fortpflanzungsgeschwindigkeit des Summen- und des Übertragssignales zu lösen, jedoch bei dem aus der eingangs genannten Veröffentlichung "Computer" (Okt. 1978), Seite 19 bis 29, bekannten Multiplizierer.

Diese Aufgabe wird durch die im kennzeichnenden Teil des Anspruchs 1 angegebenen Maßnahmen gelöst.

Die im Multiplizierer nach der Erfindung verwendeten binären Addierzellen sind vom Typ der Hochgeschwindigkeits-Übertragsfortpflanzung, da ihre Summensignal-Bildungszeit etwa p mal größer ist als ihre Übertrags-Fortpflanzungszeit.

Die Erfindung und ihre Merkmale werden im folgenden anhand der angefügten Zeichnungen erläutert, in denen

die Fig. 1 das Schaltschema einer bekannten 8 x 8 -Multipliziereranordnung,

die Fig. 2 bis 5 Schaltschemen von 16 x 16-Multiplizierer-Anordnungen nach der Erfindung mit unterschiedlichen Zwischenverbindungen und

die Fig. 6 bis 9 Blockschaltbilder von unterschiedlichen Typen von binären Addierzellenzeigen, welche in den Multipliziereranordnungen der Fig. 2 bis 5 verwendbar sind.

Die Fig. 1 zeigt eine 8 x 8-Multipliziereranordnung, entsprechend der "Übertragsrückstellungs"-Anordnung, wie sie in dem eingangs erwähnten Aufsatz von Shlomo Waser beschrieben wurde. Diese Multipliziereranordnung erlaubt die Multiplikation von zwei Binärworten mit je 8 Bits X0 bis X7 und Y0 bis Y7. Jedes der Symbole X in der quadratförmigen Matrix steht für einen Elementarmultiplizierer, wie 200 oder 201, beispielsweise für ein AND-Gatter, der das Teilprodukt des der Spalte des Multiplizierers entsprechenden Bits (X2 für den Multiplizierer 200) des ersten Wortes mit dem der Reihe des Multiplizierers entsprechenden Bits (Y0 für den

Multiplizierer 200) des zweiten Wortes bildet. Diese 8 x 8-Multipliziereranordnung enthält außerdem binäre Addierzellen, wie 202 oder 203, die in einer zugeordneten Matrix angeordnet sind und die die Teilsummen bilden, die zur Bildung der Bits P0 bis P15 des Endergebnisses erforderlich sind. Die Zellen sind durch ein Achteck versinnbildlicht, wie bei 203, und weisen zwei Eingänge und zwei Ausgänge auf, nämlich für das Übertragssignal r nach unten und das Summensignal s schräg zur Seite. Diejenigen Zellen, welche durch ein Quadrat, beispielsweise 202, versinnbildlicht werden, sind Zellen mit drei Eingängen, von denen einer das Übertragssignal von der vorhergehenden Zelle erhält, und mit zwei Ausgängen, nämlich für Summensignal und Übertragssignal, die in gleicher Weise wie bei den vorhergehenden Zellen angeordnet sind. Zellen, welche das Symbol X einschließen, sind Zellen, bei denen ein Eingang das vom örtlichen Elementarmultiplizierer gebildete Teilprodukt erhält. Sämtliche Zellen der Fig. 1 fallen in diese Kategorie. Gleiches gilt jedoch nicht für die folgenden Figuren, wie es aus folgenden Ausführungen ersichtlich ist.

Gleich wie kann festgestellt werden, daß alle von den Zellen gebildeten Summen an einen Eingang der angrenzenden Zelle der gleichen Ordnung, in die Richtung der Matrixdiagonalen über die die Teilprodukte gleicher Ordnung bildenden Elementarmultiplizierer geleitet werden. Die Übertragssignale breiten sich senkrecht zur Ausgangsseite der Matrix unter Bildung der höchstwertigen Bits des Endergebnisses (P8 bis P15) aus. Am Ausgang am unteren Rand der Matrix haben wir zwei Rechengrößen, wovon die eine aus Übertragssignalen der letzten Zellenstufe besteht und die andere die Summen der gleichen Stufe ist. Die letzten Additionen werden in bekannter Weise mittels eines Addierwerkes mit "vorbestimmtem Übertrag" (carry-look-ahead) 204 durchgeführt.

Es ist erkennbar, daß die Multiplikationgeschwindigkeit in einer solchen Anordnung hauptsächlich von der Übertrags-Ausbreitungszeit bestimmt ist. Ferner wird ein Addierwerk mit "vorbestimmten Übertrag" sehr kompliziert und aufwendig, sobald Wortlängen von einigen Bits überschritten werden.

Die Erfindung sieht die Verwendung von Hochgeschwindigkeits-Übertragszellen der in der oben genannten FR-A- 2 516 675 beschriebenen Art in der Weise vor, daß der größtmögliche Vorteil ohne Einbuße an Multiplizierleistung aufgrund der relativen Verlängerung der Summenbildungszeit erhalten wird. Ferner ist beabsichtigt, die Verwendung von Addierwerken mit "vorbestimmtem Übertrag" zu vermeiden.

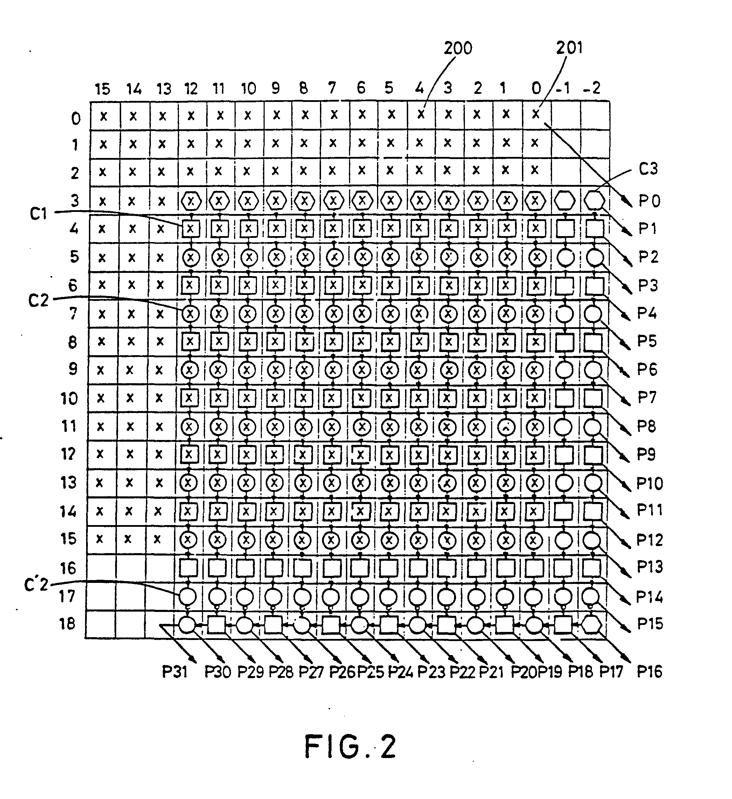

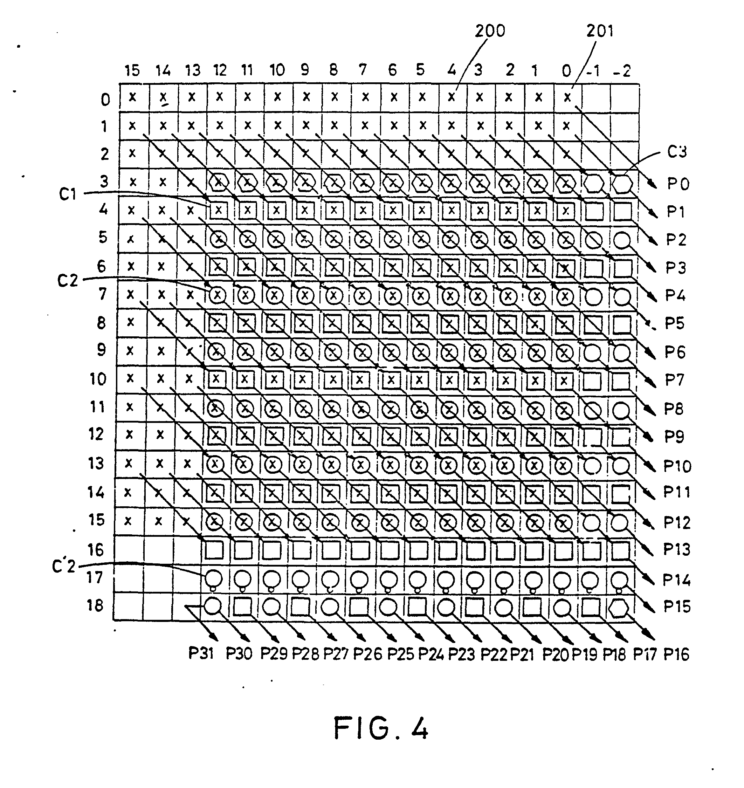

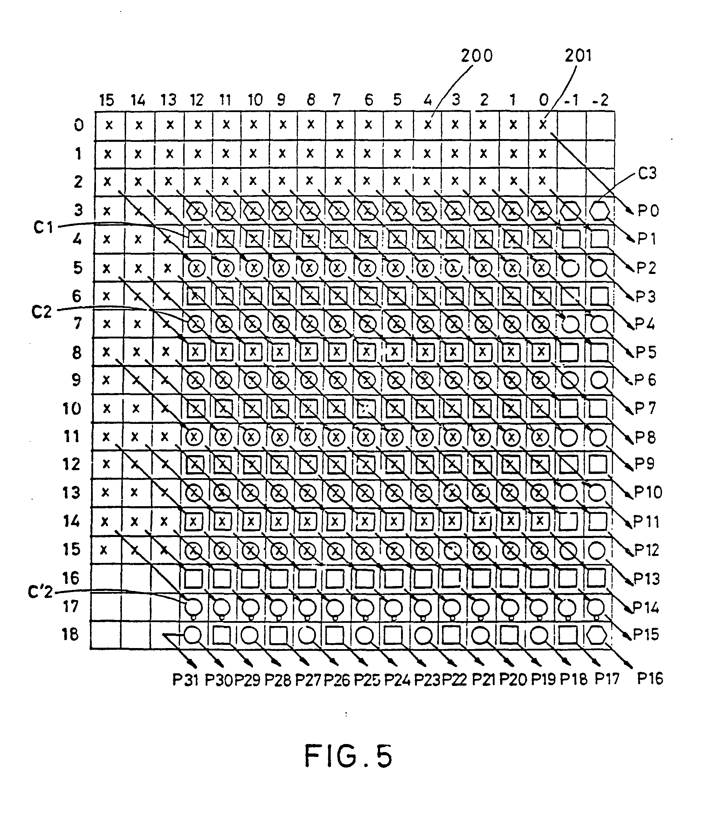

Die Fig. 2 bis 5 zeigen eine 16 x 16-Multiplizieranordnung, welche auf diesem Grundgedanken beruht. Die vier Figuren 2 bis 5 zeigen die gleiche Anordnung mit unterschiedlichen Zwischenverbindungen, welche im Interesse der Klarheit auf unterschiedlichen Figuren dargestellt sind. In diesen Figuren sind die durch X bezeichneten Elementarmultiplizierer, wie 200 oder 201, NAND-Gatter, die das Bit x der entsprechenden Spalte und das Bit y der entsprechender Zeile erhalten. Die Bits x0 bis x15 des ersten Wortes werden an die von 0 bis 15 nummierten entsprechenden Spalten und die Bits y0 bis y15 des zweiten Wortes an die von 0 bis 15 numerierten entsprechenden Zeilen angelegt.

Der Multiplizierer enthält ferner eine zugeordnete Matrix von Addierzellen von vier unterschiedlichen Typen C1, C2, C'2 und C3, die dem entsprechend durch Quadrate, Kreise, Kreise mit darunterliegendem kleinen Kreis zur schematischen Kennzichnung der Inversion des Übertragssignals und Sechsecke symbolisiert sind. Sämtliche Zellen haben einen Summenausgang, der schräg zur Unterseite in Richtung auf die oben erwähnte Diagonale zeigt, und einen Übertragssignalausgang, der senkrecht zur Unterseite mit Ausnahme der letzten mit 18 bezifferten Zeile zeigt, wie wir aus folgendem ersehen werden.

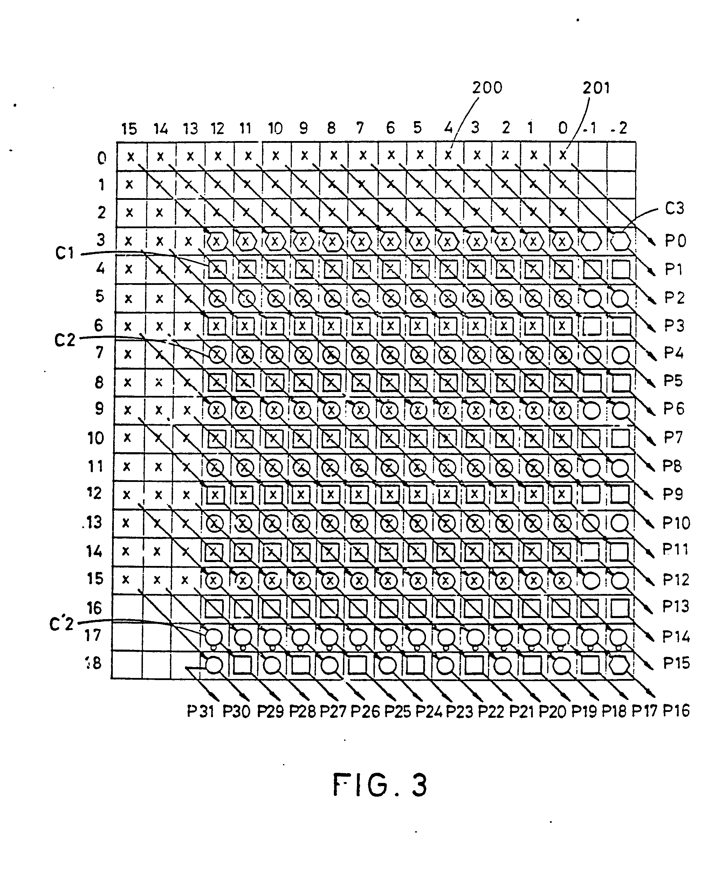

In der Diagonalrichtung (Summen-Ausbreitungsrichtung) werden die Zwischenergebnisse zur drittnächsten Zelle (Fig. 3 bis 5) übertragen. Daher haben die ersten drei Zeilen (0, 1, 2) und die ersten drei Spalten (15, 14, 13) der Matrix der Elementarmultiplizierer keine zugeordneten Zellen in der zugeordneten Matrix von binären Addierzellen. Diese zugeordnete Matrix ist abgeschlossen miteiner elektronischen "Rinne" (gouttiére), die die Zwischenergebnisse sammelt, die von den Zellen der Spalten 0 bis 2 und von den Zeilen 13 bis 15 die Bildung der Bits des Endergebnisses P0 bis P31 herkommen. Diese "Rinne" besteht aus zwei Spalten -1, -2 und drei Zeilen 16 bis 18 von zusätzlichen Zellen, die nicht den örtlichen Elementarmultiplizierern zugeordnet sind.

Bevor der Aufbau des Multiplizierers und seine Wirkungsweise im einzelnen erläutert wird, sollte die Schaltungsanordnung der unterschiedlichen Zellentypen erläutert werden. Sämtliche Zellen bilden die komplementäre Summe S̄. Andererseits ist, abhängig von den Zellentyp das Übertragssignal, manchmal das Übertragssignal der wahre Wert R̄s und manchmal der Komplementärwert Rs.

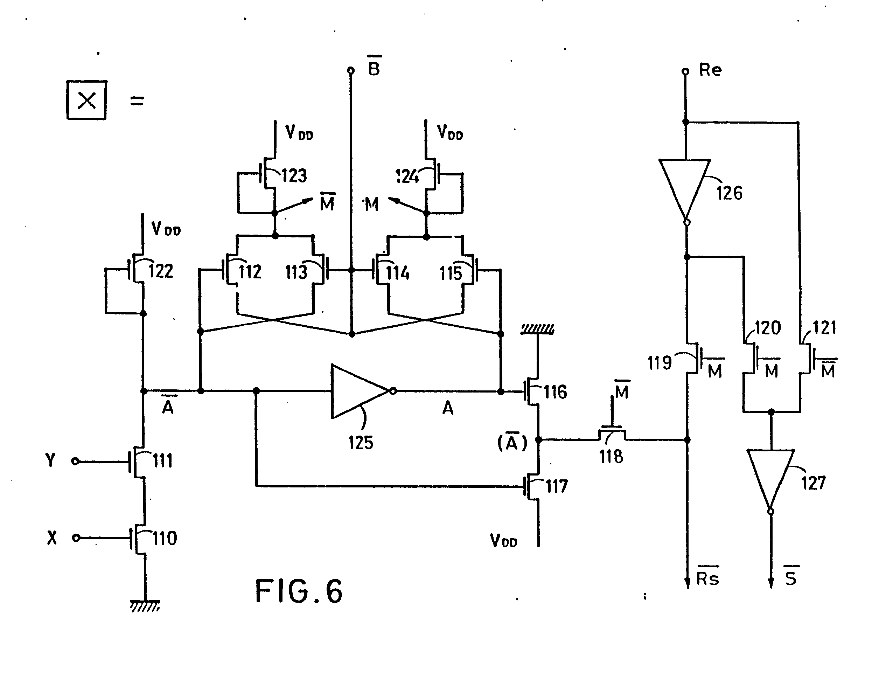

Zellen von dem durch ein Quadrat versinnbildlichten Typ C1 werden in der Fig. 6 dargestellt. Diese sind Zellen mit drei Eingängen, die den Komplementärwert Ā, B̄ und den wahren Wert des Übertragssignals Re von der vorhergehenden Zelle erhalten. Der Komplementärwert Ā wird für die gezeigte Zelle aus einem örtlichen Elementarmultiplizierer abgeleitet, der aus einem NAND-Gatter besteht, das das Teilprodukt der Bits X und Y bildet. Dieses NAND-Gatter enthält die MOS-Transistoren 110 und 111 in Reihe mit einem MOS-Transissor 122, der als Widerstand geschaltet ist. Eine solche Zelle wurde bereits in FR-A-2 516 675 (Fig. 12) beschrieben. Sie enthält eine Zwischenzelle zur Bildung der Variablen M̃ und M, wobei M das Ergebnis einer exlusiven OR-Operation von Variablen A und B ist.

Diese Zwischenrechnungszelle besteht aus den MOS-Transistoren 112 bis 115 den MOS-Transistoren 123 und 124, welche als Widerstände geschaltet sind und dem Inverter 125. Um den Wert Ã an den Übertragssignalausgang R̃s über den MOS-Transistor 118 zu bringen, wenn die Variable M auf dem Niveau 0 liegt, wird eine Entkopplungszelle 116, 117 verwendet, wohingegen der Ausgang R̃s das Übertragssignal von dem Eingang Re nach Inversion über den Inverter 126 und den MOS-Transistor 118 erhält, wenn die Variable M auf dem Niveau 1 liegt. Die komplementäre Summe S̃ wird mittels der MOS-Transistoren 120 und 121 und des Inverters 127 aus den Werten Re und R̃e erhalten. Die C1-Zellen bilden daher das Summensignal und das Übertragssignal in komplementärer Form.

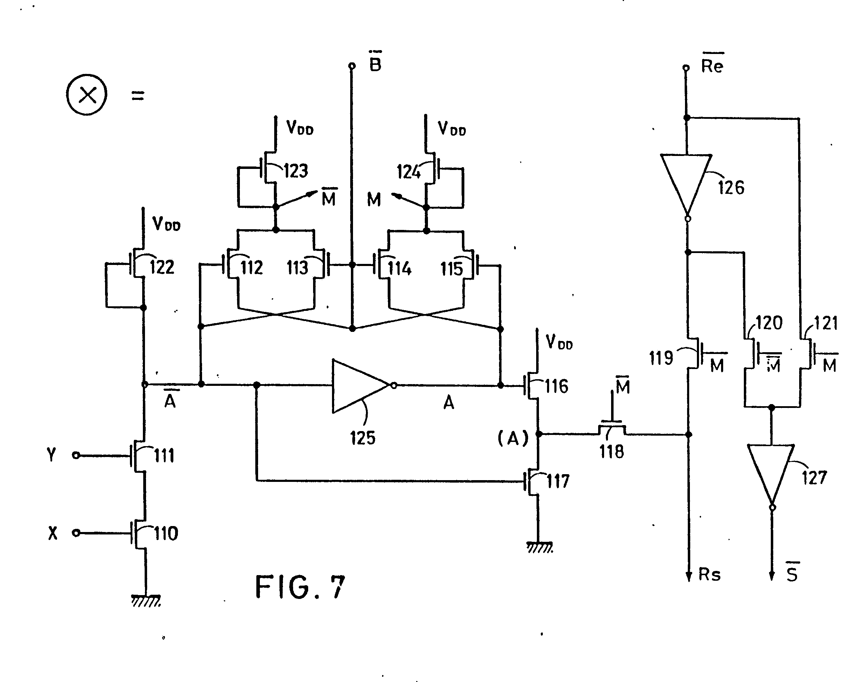

Die Fig. 7 zeigt eine durch einen Kreis versinnbildlichte Zelle des Typs C2. Diese Zelle weist drei Eingänge auf, die die komplementären Variablen Ã, B̃ und ein komplementäres Übertragssignal R̃e aus der vorhergehenden Zelle erhalten. Sie bildet ein komplementäres Ausgangssummensignal S und das nichtinvertierte Übertragsausgangssignal Rs. Es wurden die gleichen Bezugsziffern wie die der Fig. 6 verwendet. Die einzigen Unterschiede liegen darin, daß die Verbindungen der Entkopplungszelle 118, 117 mit Masse und mit der Spannungsquelle $V_{DD}$ vertauscht wurden, um den wahren Wert von A an den Transistor 118 zu bringen und darin, daß die Transistoren 120 und 121 durch M̃ und M anstelle von M bzw. M̃ angesteuert werden.

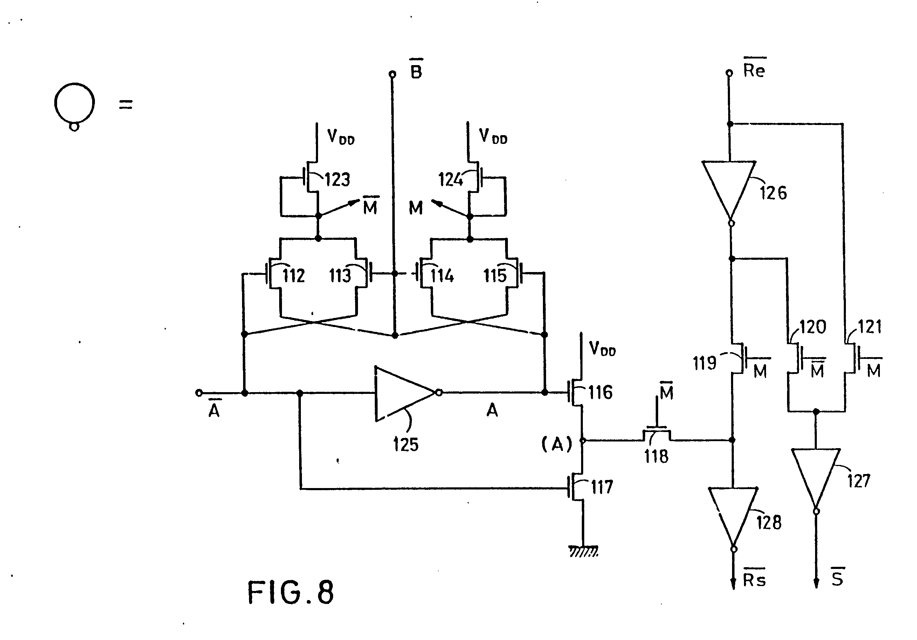

Die Fig. 8 zeigt eine durch einen Kreis mit einem kleinen darunterliegenden Kreis versinnbildlichte Zelle vom Typ C'2. Diese ist eine Zelle vom Typ C2, die durch eine Ergänzung mit dem Inverter 128 am Übertragsausgang modifiziert wurde. Da diese Zelle nicht mit einem örtlichen Elementarmultiplizierer verbunden ist, entfällt das NAND-Gatter 110, 111, 122 der Fig. 7. Diese Zelle C'2 weist drei Eingänge für Ã, B̃ und R̃e und zwei Ausgänge für R̃s und S̃ auf.

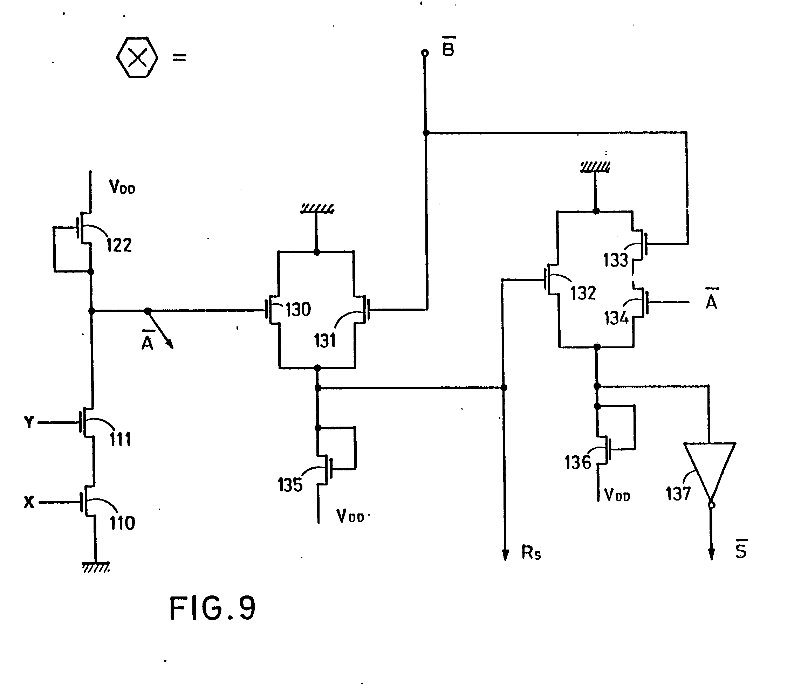

Die Fig. 9 zeigt schließlich die durch ein Sechseck symbolisierte Zelle des Typs C3. Diese zeigt zwei Eingänge, die die komplementären Variablen Ã und B̃ erhalten, und weist zwei Ausgänge auf, die das komplementäre Summensignal S̃ und das nicht-invertierte Übertragssignal Rs zur Verfügung stellen. Diese Zelle enthält zwei MOS-Transistoren 130, 131 in Parallelschaltung zwischen Masse und einem als Widerstand 135 an die Spannungsquelle $V_{DD}$ angeschlossenen MOS-Transistor. Die Transistoren 130 und 131 werden durch die Variablen Ã bzw. B̃ angesteuert, während das Übertragsausgangssignal Rs zwischen den Transistoren 130, 131 und dem als Widerstand geschalteten Transistor 135 abgegriffen wird. Das komplementäre Summensignal S̃ wird mittels der in Reihe liegenden Transistoren 133, 134 und dem dazu zwischen Masse und dem als Widerstand geschalteten Transistor 131 beschafft, wobei das Summensignal S̃ über den Inverter 137 erhalten wird, der an dem Verbindungspunkt einerseits zwischen den Transistoren 132 und 134 und andererseits dem Transistor 136 liegt. Der Transistor 132 wird vom Ausgangsübertragssignal Rs und die Transistoren 133 und 134 werden von den Variablen Ã bzw. B̃ angesteuert.

Kehren wir nun zu der Multipliziereranordnung der Fig. 2 bis 5 zurück, so erkennen wir, daß die Summenausgangssignale sämtlicher Zellen, welche komplementäre Ausgangssignale S̃ zur Verfügung stellen, an irgendeine andere Zelle angelegt werden können, welche stets zumindest zwei Eingänge für komplementäre Variablen aufweisen. Lediglich die Übertrags-Ausgangssignale und -Eingangssignale wechseln zwischen nichtkomplementären und komplementären Werten. Dies ist bei der Fig. 2 der Fall die die Ausbreitung der Übertragssignale zwischen den Zellen zeigt. Mit Ausnahme der vorletzten Zeile 17, welche Teil einer elektronischen "Rinne" sind, welche aus C'2-Zellen besteht, die ein komplementäres Übertragsausgangssignal zur Verfügung stellen, und der letzten Zeile 18, in der sich die Übertragssignale entlang der Zeile in Richtung auf die höchstwertigen Bits ausbreiten, und die abwechselnd aus C1-Zellen und C2-Zellen besteht, besteht die zugeordnete Matrix abwechselnd aus Zellenzeilen aus Zellen mit einem nichtinvertierten Übertragseingangssignal und einem komplementären Übertragsausgangssignal und Zellenzeilen aus Zellen mit einem komplementären Übertragseingangssignal und einem nichtkomplementären Übertragsausgangssignal. Die am Scheitel der Matrix in Richtung der Diagonalen befindliche Zelle ist eine C3-Zelle mit zwei Eingängen; ihr Summenausgang bildet das Bit P16 des Endproduktes. Schließlich ist die erste Zeile 3 der zugeordneten Matrix eine Zeile von C3-Zellen mit zwei komplementären Eingängen. Das Vorhandensein von zwei komplementären Eingängen an jeder Zelle erlaubt die alleinige Verwendung der NAND-Gatter für die Elementarmultiplizierer, so daß die Inverter zum Fortfall kommen, welche anderenfalls mit ihnen zu verbinden wären. Die Verwendung von Wechsels des Übertragssignals erlaubt außerdem, daß die Anzahl der Inverter, durch die die Übertragssignale treten, auf ein Minimum reduziert wird, wodurch ihre Ausbreitung beschleunigt ist.

Die Fig. 3, 4 und 5 veranschaulichen für die Zeilen 0, 3, 6..., die Zeilen 1, 4, 7... bzw. die Zeilen 2, 5, 8... die Zwischenverbindungen in Ausbreitungsrichtung der Summensignale gleichlaufend mit der bereits erwähnten Diagonalen.

Die Erfindung wurde an dem Beispiel eines 16 x 16-Multiplizierers mit Übergängen der Summenausgänge zur jeweils drittnächsten Zelle beschrieben. In diesem Fall sollten die binären Addierzellen C1, C2, C'2, C3 vorzugsweise eine Übertragsausbreitungszeit etwa 3 mal kürzer aufweisen, als die Summenbildungszeit benötigt. Es können jedoch auch Sprünge von je zwei oder allgemein von je p bei Multiplizierern von Worten mit N Bits in Betracht gezogen werden, wobei die Anzahl als eine Funktion der Zahl N im Hinblick auf die Optimierung der Betriebsweise des Multiplizierers und der binären Addierzellen wird. Wie leicht bewiesen werden kann, würde die elektronische "Rinne" im Falle der Sprünge um je p p-1 Spalten an derjenigen Seite der Zellenmatrix enthalten, wo die geringstwertigen Bits geliefert werden und p Zellenzeilen auf derjenigen Seite der Matrix, wo die höchstwertigen Bits zur Verfügung stehen, wobei die letzte Zeile eine Zeile von alternativen Zellen und die vorletzte Zeile komplementäre Übertragssignale wie in dem vorstehend beschriebenen Ausführungsbeispiel liefert.

**Patentansprüche**

1. Hochgeschwindigkeits-Multiplizierer in integrierter MOS-Technik zur Multiplikation zweier N-Bit-Binärworte, bei dem
- in einer quadratischen Matrix $N^2$ Elementarmultiplizierer (X) angeordnet sind, von denen jeder das Teilprodukt eines auf eine entsprechende Matrixspalte einwirkenden Bits des ersten Binärwortes mit einem auf eine entsprechende Matrixzeile einwirkenden Bits des zweiten Binärwortes liefert,
- zur fortlaufenden Summenbildung, die zur Bildung der 2N Bit des Endergebnisses erforderlich ist, je eine binäre Elementaraddierzelle ($C_1$, $C_2$, $C'_2$, $C_3$) einem Elementarmultiplizierer (X) zugeordnet ist,
- - welche Elementaraddierzellen in einer zugeordneten Matrix angeordnet sind, in der der Summenausgang ($\bar{S}$) jeder Zelle in Richtung der Matrixdiagonalen (Summen-Ausbreitungsrichtung) über die Elementarmultiplizierer unter Bild eines Teilproduktes gleicher Ordnung mit dem Eingang einer weiteren Zelle verbunden ist, und
- - der Übertragsausgang (Rs, $\bar{R}\bar{s}$) jeder Zelle mit dem Eingang einer benachbarten Zelle in Richtung der zugeordneten Matrix zur Ausgangsseite dieser Matrix hin unter Bildung der höchstwertigen Bits des Endergebnisses verbunden ist (Übertragsfortpflanzgungsrichtung) dadurch gekennzeichnet,
- daß die zugeordnete Matrix binäre Addierzellen, in denen die Bildungszeit des Summensignals ($\bar{S}$) etwa p-mal größer ist als die Ausbreitungszeit des Übertragssignals (Rs, $\bar{R}\bar{s}$), enthält,
- - keine Zellen enthält, welche mit den ersten p Zeilenreihen (0, 1, 2) und Spaltenreihen (15, 14, 13) von Elementarmultiplizierern (200, 201) verbunden sind, und

- - ergänzt ist durch p - 1 Spaltenreihen (-1, -2) oder Zeilenreihen von zusätzlichen Zellen an der Ausgangsseite der Matrix zur Bildung des geringstwertigen Bits sowie durch P Zeilenreihen (16, 17, 18) bzw. Spaltenreihen von zusätzlichen Zellen an der Ausgangsseite der Matrix zur Bildung der höchstwertigen Bits,
- wobei die zusätzlichen Zellen im Hinblick auf die Erzeugung der Bits des Endergebnises zur Gewinnung von Zwischenergebnissen dienen, die gewonnen werden aus Zwischenergebnissen von den Zellen der vorausgehenden Spaltenreihen und Zeilenreihen der zugeordneten Matrix,
- daß die Übertragungen in Richtung der Summen-Ausbreitungsrichtung jeweils über p Zellen erfolgen, wobei p eine ganze Zahl größer als eins ist,
- daß die binären Addierzellen (C1, C2, C'2) mit Ausnahme der nur zwei Eingänge ($\bar{A}$, $\bar{B}$) aufweisenden Zellen (C3) der ersten Zeile (3) oder Spalte an der Matrixseite, von der die Überträge senkrecht abgeleitet werden, je drei Eingänge ($\bar{A}$, $\bar{B}$, Re oder $\bar{R}\bar{e}$) und einen Summen- und einen Übertragsausgang ($\bar{S}$, Rs oder $\bar{R}\bar{s}$) aufweisen und
- daß in der letzten Zeile (18) oder Spalte der zusätzlichen Zellen auf der Seite der Matrix, die die höchstwertigen Bits des Endergebnisses liefern, der Übertragsausgang jeder Zelle mit dem Eingang der benachbarten Zelle der gleichen Zeile in Richtung auf die höchstwertigen Bits verbunden ist, wobei die am Scheitelpunkt der Matrix auf der genannten Diagonale liegende Zelle dieser letzten Zeile eine Zelle (C3) mit zwei Eingängen und zwei Ausgängen ist, deren Summenausgang das (N + 1)-te Bit (P16) des Endproduktes liefert.

2. Multiplizierer nach Anspruch 1, dadurch gekennzeichnet,
- daß jeder der Elementarmultiplizierer (200, 201) aus einem NAND-Gatter (110, 111, 122) besteht, das den komplementären Wert ($\bar{A}$) des entsprechenden Teilproduktes (X, Y) bildet,
- daß jede binäre Elementaraddierzelle (C1, C2, C'2, C3) an ihrem Summenausgang den Komplementärwert der Summe ($\bar{S}$) bildet,
- daß die Zeilen (bzw. Spalten) der binären Elementaraddierzellen der Matrix, die sich senkrecht zu Übertragsfortpflanzungsrichtung erstrecken, abwechselnd aus einer Reihe (3, 5, 7, 9, 11, 13, 15) mit Zellen (C2, C3) bestehen, die den wahren Wert (Rs) des Übertragsignals an ihrem Übertragsausgang aus sämtlichen als Komplementärwerte vorliegenden Eingangsvariablen liefern, oder aus einer Reihe (4, 6, 8, 10, 12, 14, 16) von Zellen (C1) bestehen, die den Komplementärwert ($\bar{R}\bar{s}$) des Übertragssignals an ihrem Übertragsausgang aus zwei komplementären Eingangsvariablen und dem wahren Übertragssignal aus der vorhergehenden Zelle bilden,
- daß die Zellen (C3) der ersten Reihe (3) der Matrix zwei Eingänge aufweisen, die zwei Komplementärwerte ($\bar{A}$, $\bar{B}$) erhalten,
- daß die Zellen der vorletzten Reihe (17) der

Matrix Zellen (C'$_2$) sind, die den Komplementärwert des Übertragssignals an ihrem Ausgang zur Verfügung stellen, und

- daß die Zellen der letzten Reihe (18) der Matrix alternativ Zellen (C2) sind, die den wahren Wert, und Zellen (C1) sind, die den Komplementärwert des Übertragssignals bilden.

3. Multiplizierer nach Anspruch 2, dadurch gekennzeichnet,

- daß jede der je zwei Eingänge aufweisenden Elementaraddierzellen (C3) zwei MOS-Transistoren (130, 131) aufweist, die parallel zwischen Masse und einem MOS-Transistor (135) liegen, der als Widerstand mit der Spannungsquelle (V$_{DD}$) verbunden ist, wobei das Übertragsausgangssignal (Rs) am Verbindungspunkt zwischen den parallel geschalteten Transistoren abgriffen wird, welche von den komplementären Eingangsvariablen (Ā, B̄) angesteuert werden,

- daß diese Zelle außerdem in Parallelschaltung zwischen Masse und einem als Widerstand geschalteten MOS-Transistor (136) einerseits einen durch das Übertragsausgangssignal (Rs) gesteuerten MOS-Transistor (132) und andererseits zwei in Serie entsprechend von den komplementären Eingangsvariablen (Ā, B̄) gesteuerte MOS-Transistoren (133, 134) aufweist, wobei der als Widerstand (136) geschaltete Transistor ebenfalls mit der Spannungsquelle (V$_{DD}$) verbunden ist, und

- daß das komplementäre Ausgangssummensignal (S̄) über einen Inverter (137) an demjenigen Anschluß des als Widerstand geschalteten Transistors (136) abgegriffen wird, der nicht mit der Spannungsquelle verbunden ist.

**Claims**

1. High-speed multiplier in MOS integrated technology for multiplying two N-bit words

- wherein $N^2$ elementary multipliers (X) are arranged in a square matrix, each of said elementary multipliers providing the partial product of a bit of the first word, which bit acts on a corresponding matrix column, and a bit of the second word, which bit acts on a corresponding matrix row,

- wherein, to form the successive sums required to form the 2N bits of the final result, each of the elementary multipliers (X) is assigned a binary elementäry adder cell (C1, C2, C'2, C3),

- - which elementary adder cells are arranged in an associated matrix in which the sum output (S̄) of each cell is connected to the input of a further cell in the direction of the matrix diagonal (sum propagation direction) through the elementary multipliers, forming a partial product of the same order, and

- wherein the carry output (Rs, R̄s) of each cell is connected to the input of an adjacent cell in the direction of the associated matrix toward the output side of the latter, forming the most significant bits of the final result (carry propagation direction),

<u>characterized in</u>

- that the associated matrix contains binary adder cells in which the time required to produce the sum signal (S̄) is approximately p times longer than the propagation time of the carry signal (Rs, R̄s),

- - contains no cells connected to the first p rows (0, 1, 2) and columns (15, 14, 13) of elementary multipliers (200, 201), and

- - is supplemented by p - 1 columns (-1, -2) or rows of additional cells on the output side of the matrix for forming the least significant bit, and by p rows (16, 17, 18) or columns of additional cells on the output side of the matrix for forming the most significant bits,

- the additional cells serving to obtain intermediate results which are derived from the cells of the preceding columns and rows of the associated matrix,

- that each transfer in the sum propagation direction takes place via p cells, where p is an integer greater than one,

- that each of the binary adder cells (C1, C2, C'2) has three inputs (Ā, B̄, Re or R̄e), one sum output (S̄), and one carry output (Rs or R̄s) except the cells (C3) of the first row (3) or column on the side of the matrix from which the carries are propagated perpendicularly, the latter cells (C3) having only two inputs (Ā, B̄), and

- that in the last row (18) or columns of the additional cells on the side of the matrix delivering the most significant bits of the final result, the carry output of each cell is connected to the input of the adjacent cell of the same row in the direction of the most significant bits, the cell of said last row which is located at the vertex of the matrix on said diagonal being a cell (C3) with two inputs and two outputs the sum output of which provides the (N + 1)th bit (P16) of the final product.

2. A multiplier as claimed in claim 1, characterized in

- that each of the elementary multipliers (200, 201) is constituted by a NAND gate (110, 111, 122) forming the complementary value (Ā) of the corresponding partial product (X, Y),

- that each binary elementary adder cell (C1, C2, C'2, C3) provides the complementary value of the sum (S̄) at its sum output,

- that the rows (or columns) of binary elementary adder cells of the matrix which extend perpendicular to the carry propagation direction consist alternately of a row (3, 5, 7, 9, 11, 13, 15) of cells (C2, C3) providing the true value (Rs) of the carry signal at their carry output from all input variables present as complementary values and a row (4, 6, 8, 10, 12, 14, 16) of cells (C1) providing the complementary value (R̄s) of the carry signal at their carry output from two complementary input variables and the true carry signal from the preceding cell,

- that the cells (C3) of the first row (3) of the matrix have two inputs which are supplied with two complementary values ($\bar{A}$, $\bar{B}$),

- that the cells of the penultimate row (17) of the matrix are cells (C'2) which provide the complementary value of the carry signal at their output, and

- that the cells of the last row (18) of the matrix are alternately cells (C2) forming the true value and cells (C1) forming the complementary value of the carry signal.

3. A multiplier as claimed in claim 2, characterized in

- that each of the two-input clementary adder cells (C3) contains two MOS transistors (130, 131) which are connected in parallel between ground and an MOS transistor (135) connected as a resistor to the voltage source ($V_{DD}$), the carry output signal (Rs) being taken from the junction point between the parallel transistors, which are controlled by the complementary input variables ($\bar{A}$, $\bar{B}$),

- that said cell also contains, between ground and an MOS transistor (136) connected as a resistor, a parallel arrangement of an MOS transistor (132) controlled by the carry output signal (Rs) and two series-connected MOS transistors (133, 134) controlled by the respective complementary input variables ($\bar{A}$, $\bar{B}$), the transistor connected as a resistor (136) being also connected to the voltage source ($V_{DD}$), and

- that the complementary output sum signal ($\bar{S}$) is taken through an inverter (137) from that terminal of the transistor (136) connected as a resistor which is not connected to the voltage source.

**Revendications**

1. Multiplieur rapide en circuit intégré MOS pour la multiplication de deux mots binaires à N éléments binaires, dans lequel

- N$^2$ multiplieurs élémentaires (X) sont disposés en matrice carrée, fournissant chacun le produit partiel d'un élément binaire d'un premier desdits mots, affecté à la colonne correspondante de la matrice, et d'un élément binaire du second mot, affecté à la ligne correspondante de la matrice,

- et une cellule d'additionneur binaire élémentaire (C1, C2, C'2, C3) est associée à chaque multiplieur élémentaire (X) pour la formation progressive de sommes nécessaire pour l'obtention des 2N éléments binaires du produit final,

- - ces cellules étant arrangées en une matrice associée dans laquelle la sortie somme ($\bar{S}$) de chaque cellule est raccordée à une entrée d'une autre cellule dans la direction de la diagonale de la matrice (direction d'extension de la somme) passant par les multiplieurs élémentaires fournissant des produits partiels de même poids et

- - la sortie retenue (Rs, $\bar{R}s$) de chaque cellule

est raccordée à une entrée de la cellule adjacente dans la direction de la matrice associée, allant vers le côté de celle-ci d'où sortent les éléments binaires de plus fort poids du produit final (direction de propagation de la retenue) <u>caractérisé en ce que,</u>

- ladite matrice associée comprend des cellules d'additionneur binaire dans lesquelles le temps de formation du signal de somme ($\bar{S}$) est environ p fois plus grand que le temps de propagation du signal de retenue (Rs, $\bar{R}$),

- - ne comprend pas de cellule associées aux p premières lignes (0, 1, 2) et colonnes (15, 14, 13) de multiplieurs élémentaires (200, 201) et

- - est complétée par p - 1 colonnes (-1, -2) ou lignes de cellules supplémentaires sur le côté de la matrice d'où sortent les éléments binaires de plus faible poids, ainsi que par p lignes (16, 17, 18) ou colonnes de cellules supplémentaires sur le côté de la matrice d'où sortent les éléments binaires de plus fort poids,

- lesdites cellules supplémentaires, en vue de l'élaboration des bits du produit final, servent à l'obtention de résultats intermédiaires, lesquels sont obtenus de résultats intermédiaires des cellules des colonnes et lignes précédentes de la matrice associée,

- les retenues ont lieu chacune sur p cellules dans la direction d'extension de la somme, p étant un nombre entier supérieur à un,

- les cellules d'additionneur binaire (C1, C2, C'2) sont du type à trois entrées ($\bar{A}$, $\bar{B}$, Re ou $\bar{R}e$) et deux sorties ($\bar{S}$, Rs ou $\bar{R}s$) de la somme et de la retenue, sauf les cellules de la première ligne (3) ou colonne sur le côté de la matrice à partir duquel se propagent perpendiculairement les retenues, ces dernières cellules (C3) comportant seulement deux entrées ($\bar{A}$, $\bar{B}$), et

- dans la dernière ligne (18) ou colonne de cellules supplémentaires sur le côté de la matrice d'où sortent les éléments binaires de plus fort poids du produit final, la sortie retenue de chaque cellule est envoyée à une entrée de la cellule adjacente de la même ligne dans la direction des éléments binaires de poids plus élevé, la cellule de cette dernière ligne qui se trouve au sommet de la matrice sur ladite diagonale étant une cellule à deux entrées et deux sorties (C3) dont la sortie somme fournit le N + 1 $^{ème}$ (P16) élément binaire du produit final.

2. Multiplieur selon la revendication 1, caractérisé en ce que

- chaque multiplieur élémentaire (200, 201) est constitué par une porte NON-ET (110, 111, 122) fournissant le complément ($\bar{A}$) du produit partiel (XY) correspondant,

- en ce que chaque cellule d'additionneur binaire (C1, C2, C'2, C3) est conçue pour fournir le complément de la somme ($\bar{S}$) sur sa sortie somme,

- en ce que les lignes (ou colonnes) de cellules d'additionneur binaire de la matrice s'étendant perpendiculairement à la direction de propagation de la retenue comprennent alternativement une ligne (3, 5, 7, 9, 11, 13, 15) de cellules (C2, C3) fournissant la valeur vraie (Rs) de la retenue sur leur sortie retenue à partir de variables d'entrée toutes sous forme complémentée et une ligne (4, 6, 8, 10, 12, 14, 16) de cellules (C1) fournissant la valeur complémentée ($\bar{R}$s) de la retenue sur leur sortie retenue à partir de deux variables d'entrée complémentées et de la retenue vraie de la cellule en amont,

- en ce que les cellules (C3) de la première ligne (3) de la matrice sont des cellules du type à deux entrées recevant sur leurs entrées deux valeurs complémentées ($\bar{A}$, $\bar{B}$),

- en ce que les cellules de l'avant-dernière ligne (17) de la nature sont des cellules (C'2) fournissant la valeur complémentée de la retenue sur leur sortie retenue et

- en ce que les cellules de la dernière ligne (18) de la matrice sont alternativement des cellules (C2) fournissant la valeur vraie et des cellules (C1) fournissant la valeur complémentée de la retenue.

3. Multiplieur selon la revendication 2, caractérisée en ce que les cellules d'additionneur binaire à deux entrées (C3) comprennent deux transistors MOS (130, 131) montés en parallèle entre la masse et un transistor MOS (135) monté en résistance et relié à une source de tension ($V_{DD}$), la sortie retenue (Rs) étant prélevée entre les transistors en parallèle commandés respectivement par les variables d'entrée complémentée ($\bar{A}$, $\bar{B}$)

- en ce qu'elles comprennent en outre, montés en parallèle entre la masse et un transistor MOS (136) monté en résistance, d'une part un transistor MOS (132) commandé par la sortie retenue (Rs) et d'autre part deux transistors MOS (133, 134) en série commandés respectivement par les variables d'entrée complémentées ($\bar{A}$, $\bar{B}$), le transistor monté en résistance (136) étant relié par ailleurs à la source de tension ($V_{DD}$) et

- la sortie somme complémentée ($\bar{S}$) étant prélevée par l'intermédiaire d'un inverseur (137) sur la borne du transistor monté en résistance (136) qui n'est pas reliée à la source de tension.

FIG. 1

FIG. 2

FIG. 3

FIG. 4

FIG.5

FIG.6

FIG. 7

FIG.8

FIG.9